# EUROPÄISCHE PATENTSCHRIFT

(11) **EP 0 898 164 B1**
(45) Veröffentlichungstag und Bekanntmachung des Hinweises auf die Patenterteilung: **11.05.2011**
(21) Anmeldenummer: 98114890.1
(22) Anmeldetag: 07.08.1998
(51) Int. Cl.: G01N 21/61, G01N 21/37, G01N 21/35

(54) **Verfahren und Einrichtung zur Unterdrückung der N2O Querempfindlichkeit zu CO2 bei NDIR-Fotometern**
Method and apparatus for suppression of N2O cross-sensitivity to CO2 in NDIR-photometers
Procédé et appareil pour la suppression de la sensibilité croisée du N2O au CO2 dans les photomètres à infra-rouges non dispersifs

(30) Priorität: 18.08.1997 DE 19735718
(43) Veröffentlichungstag der Anmeldung: 24.02.1999
(73) Patentinhaber: ABB AG, 68309 Mannheim (DE)
(72) Erfinder: Zöchbauer, Michael Dr., 61440 Oberursel (DE); Vogt, Siegfried, 64546 Mörfelden-Walldorf (DE); Rings, Sebastian, 35510 Butzbach (DE)
(74) Vertreter: Schmidt, Karl Michael

(56) Entgegenhaltungen:
- EP-A- 0 584 897
- DE-A- 2 321 954
- FR-A- 2 418 460

## Beschreibung

Die Erfindung betrifft ein Verfahren sowie eine Einrichtung zur Unterdrückung von Querempfindlichkeiten bei NDIR-Verfahren bzw. NDIR-Fotometern. Gemäß Oberbegriff der Patentansprüche 1 und 5.

Industriell verwendete Fotometer bestehen im allgemeinen aus einer Strahlungsquelle, einer Meßküvette mit dem zu analysierenden Gasgemisch und einem Strahlungsdetektor. Die Strahlungsquelle enthält eine Modulationseinheit beispielsweise in der Art einer Chopper-Scheibe, die das Licht der Strahlungsquelle im Strahlengang periodisch temporär ausblendet. Die dem Strahlungsdetektor nachgeschaltete Verarbeitungselektronik wird auf die Modulationsfrequenz der Strahlenquelle getriggert, so daß Fremdlichteinflüsse so ausgeschlossen sind. Die Selektivierung auf die zu messende Komponente erfolgt je nach Meßverfahren durch dispersive Elemente wie beispielsweise Monochromatoren oder durch Interferenzfilter, durch gasgefüllte Empfänger oder Gasfilterkorrelationen oder die Verwendung möglicherweise interferometrischer Methoden, z.B. FTIR.

Der Strahlungsdetektor, ist gasgefüllt, und zwar mit derjenigen Gaskomponente, auf die die Einrichtung sensitiv sein soll. In bekannter Weise arbeitet dieser Strahlungsdetektor nach dem optopneumatischen Prinzip.

Innerhalb des eigentlichen Meßstrahlenganges bzw. der Meßküvette findet sodann eine von der Konzentration der Meßkomponente im zu messenden Gasgemisch abhängige Absorption der Strahlung in den entsprechenden spezifischen Wellenlängenbereichen, Banden, statt. Der Detektor mißt sodann, empfindlich auf der selben bzw. den selben Banden, weil er mit der zu messenden Gaskomponente gefüllt ist, das in diesem Bandenbereich nach Durchgang durch die Meßküvette verbleibende Lichtsignal. Demzufolge ist das am Detektor gemessene Signal umgekehrt proportional zur Konzentration der Meßkomponente in der Meßküvette; es entsteht ein Absorptionsspektrum.

Es ist nun bekannt, daß auch andere Gasbestandteile, die nicht die Meßkomponente selbst sind, ebenfalls Absorptionsbanden haben, die mit denjenigen der Meßkomponente überlappen. Man spricht sodann von einer Querempfindlichkeit. Das bedeutet, daß das am Strahlungsempfänger gemessene Signal nicht mehr nur noch proportional zum Anteil an Meßgas ist, sondern auch eine Abhängigkeit zur Konzentration der Querempfindlichkeitskomponente im Meßgas ist. Somit wird das eigentliche Meßergebnis mehr oder weniger stark verfälscht.

Oft gelingt jedoch die Unterdrückung der Störkomponenten nicht vollständig, so daß zusätzliche Maßnahmen erforderlich sind. Eine bekannte Methode zur Verbesserung der Unterdrückung von verbleibenden Querempfindlichkeiten ist die sogenannte Positivfilterung. Hier verwendet man einen Gasfilter von definierter Länge, welches im Allgemeinen mit der Störkomponente in hoher Konzentration gefüllt ist. Das Gasfilter befindet sich im selben Strahlengang wie die Meßgeräte. Es wird so dimensioniert, daß es die Wellenlängenanteile der Störkomponente möglichst vollständig absorbiert, die Wellenlängenanteile der Meßkomponente aber noch ausreichend groß sind. In einem der beiden Meßkanäle wird das Isotop 13 CO₂ gemessen. Bei dieser Messung stört das gleichzeitig in hoher Konzentration anwesende 12 CO₂. Mit einer Filterküvette, die mit der Störkomponente, also mit dem 12 CO₂ gefüllt ist, gelingt es, die Querempfindlichkeit deutlich zu reduzieren, vergleiche EP 0 584 897 A1.

Bei anderen Meßproblemen gelingt die Unterdrückung trotz Gasfilter aber nur sehr unvollständig. Ein Beispiel hierfür ist die Lachgasmessung (N₂O) nach dem NDIR-Verfahren bei Anwesenheit hoher CO₂-Konzentrationen. Die herkömmliche Positivfilterung bringt hier nur eine relativ geringe Unterdrückung der Querempfindlichkeit, aber keine signifikante Verbesserung.

Der vorliegenden Erfindung liegt somit die Aufgabe zugrunde, die Positivfilterung so zu verbessern, daß in schwierigen Fällen eine effektive und vollständige Unterdrückung der Querempfindlichkeit möglich ist. Ein Verfahren und die Einrichtung gemäß der Erfindung sind in den Ansprüchen 1 bzw 3 definiert.

Der Grundgedanke hierbei besteht darin, nicht das Störgas selbst, sondern ein Gas mit einer anderen Zusammensetzung einzufüllen, welches spektral besser zur Unterdrückung geeignet ist. Normalerweise geht der Fachmann davon aus, daß die Störkomponente selbst immer die beste Lösung sein sollte. Im Wesen der Erfindung hat sich jedoch gezeigt, daß durchaus Repräsentanten oder Abvarianten der Meßgaskomponente in der Lage sind, eine bessere Filterung durchzuführen.

Aus der FR 241 84 60 A1 ist eine ähnliche Messmethode bekannt, bei welcher der Einfluss von H₂O als Störgas eliminiert wird, indem SF₆ als Ersatzgas eingesetzt wird, weil H₂O nicht stabil in einer Filterküvette verbleiben würde.

Bei der Messung von Lachgas N₂O hat sich folgender Effekt gezeigt. Die wesentliche zur Messung interessante Absorptionsbande von N₂O wird überlappt von Absorptionsbanden von CO₂. Normales, aus natürlichen Ressourcen stammendes CO₂ besteht zu 99 % aus 12 CO₂ und zu etwa 1 % aus 13 CO₂. Dieses stabile Isotop 13 C in CO₂ so wurde herausgefunden, ist der eigentliche Verursacher der Querempfindlichkeit zu N₂O, da der mit N₂O überlappende Absorptionsbandenbereich durch das Isotop bzw. das 13 CO₂ erzeugt wird. Eine Befüllung des Gasfilters zur Durchführung der bekannten Positivfilterung mit normalem CO₂ gemäß der oben genannten natürlichen 99/1-Zusammensetzung bewirkt nur eine Reduktion der Querempfindlichkeit, demzufolge nur zu 1 %. Erfindungsgemäß wird demzufolge die Positivfilterung durchgeführt, indem zumindest überwiegend, wenn nicht sogar 100 % des Isotops 13 CO₂ in die Filterküvette zur Durchführung der Positivfilterung eingesetzt wird. Dies führt zu einer Reduktion der mit N₂O überlappenden Absorptionsbande von nahezu 100 %.

Diese Art der Positivfilterung, insbesondere bei der Lachgasmessung im Hinblick auf die CO₂-Querempfindlichkeit benötigt dann keine weiteren aufwendigen elektronischen Kompensationsverfahren. Insgesamt ist diese Vorgehensweise preiswert und sehr effizient.

Die Erfindung ist anhand eines Ausführungsbeispieles näher erläutert und in der Zeichnung darstellt.

Es zeigt:
- Fig. 1: Aufbau der Einrichtung.
- Fig. 2: Transmissionsspektrum von N₂O.
- Fig. 3: Transmissionsspektrum mit herkömmlicher Positivfilterung.
- Fig. 4: Transmissionsspektrum mit vollständiger Querempfindlichkeitsunterdrückung.

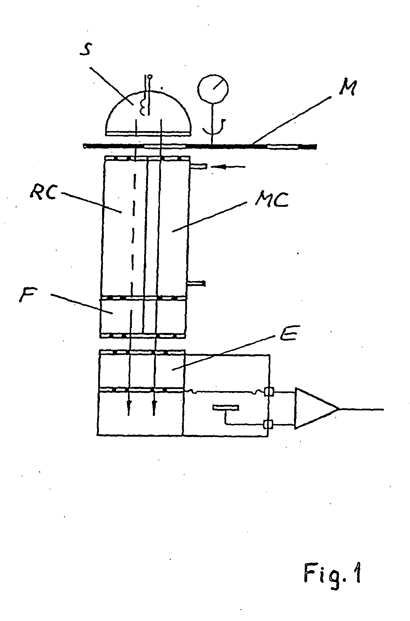

Figur 1 zeigt den Aufbau einer verwendeten Einrichtung bzw. eines NDIR-Fotometers. Die Strahlungsquelle S emittiert Infrarotstrahlung, die vom Modulator M moduliert wird. Der Modulator M besteht aus einer mit Aussparungen bzw. Schlitzen versehenen Chopperscheibe, die gedreht wird und so zu einer periodischen jeweils kurzzeitigen Ausblendung des Infrarotstrahles führt. Dies wird mit einer festgelegten Frequenz durchgeführt, die dann wiederum Eingangsgröße für die elektronische Verarbeitung des Detektorsignals ist. Es folgt die Meßküvette MC bzw. die Referenzküvette RC, die vom Modulator abwechselnd mit IR-Strahlung beaufschlagt werden. Hinter der Küvette ist das Positivfilter F angeordnet. Schließlich liegt der NDIR-Empfänger E, der mit der Meßkomponente definiert gefüllt ist, dahinter. In diesem Ausführungsbeispiel, welches auch verfahrensgemäß bevorzugt wird, ist der Empfänger mit Lachgas (N₂O) gefüllt. Würde man nun das Positivfilter zur Reduzierung der auftretenden CO₂-Querempfindlichkeit in herkömmlicher Weise mit der üblichen CO₂-Befüllung versehen, die zu 99 % aus 12 CO₂ und zu 1 % aus 13 CO₂ besteht, so würde die Querempfindlichkeit nur geringfügig reduziert.

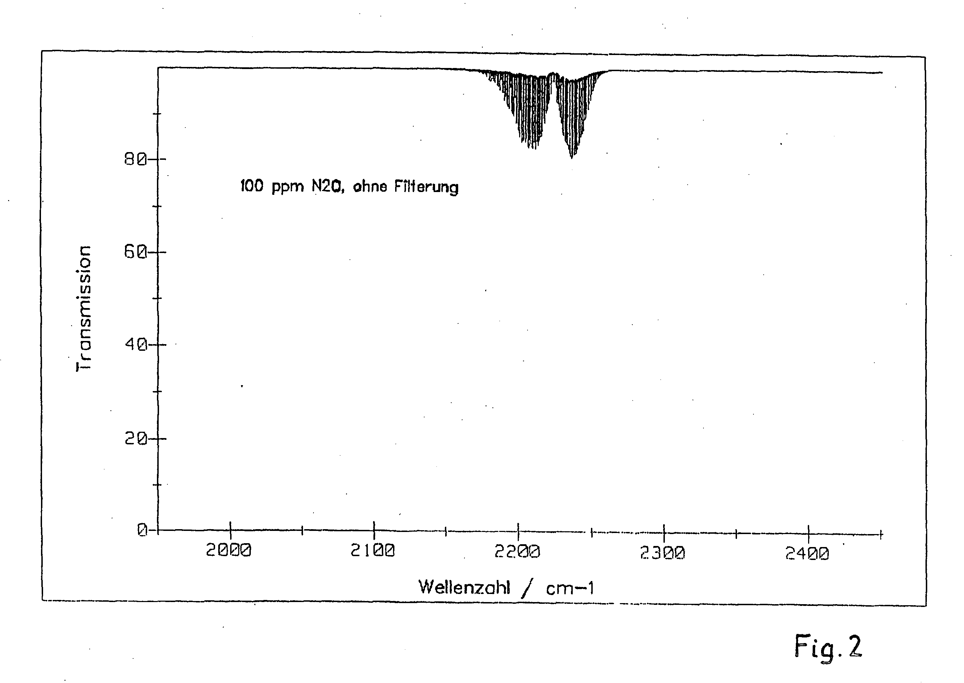

Figur 2 zeigt ein Transmissionsspektrum von N₂O in einer Küvettenlänge von 20 cm und einer N₂O-Konzentration von 100 ppm. Die Absorptionsbanden sind hier aufgenommen ohne Filterung.

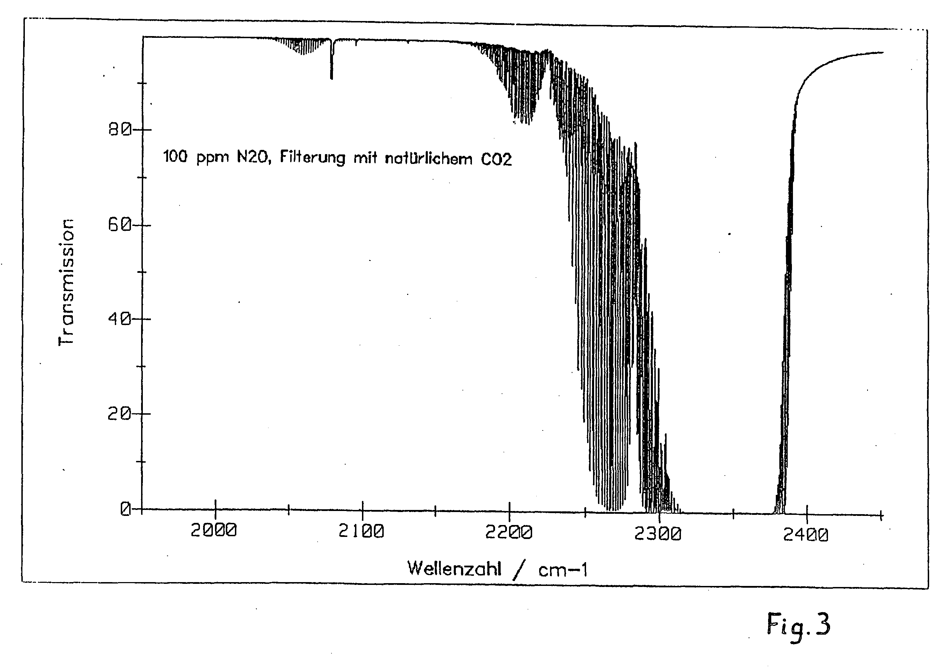

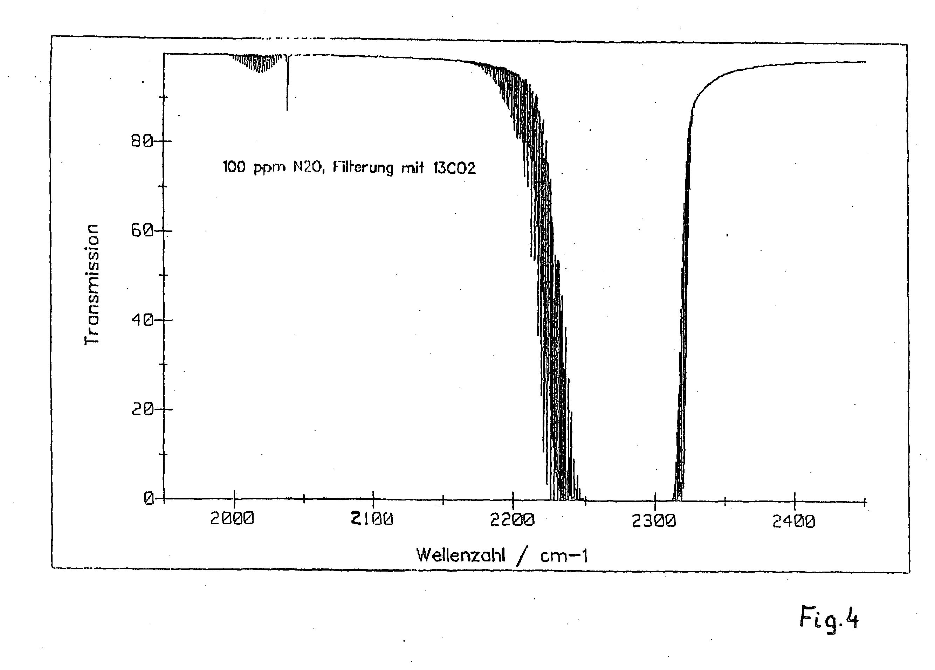

Figur 3 zeigt das mit einem herkömmlichen Positivfilter, Filterküvettenlänge 2 cm, 100 % CO₂ aus natürlichen Ressourcen gefüllt, und das daraus resultierende gefilterte Transmissionsspektrum. Die Querempfindlichkeit wird hierdurch nur um etwa 10 % reduziert. Verwendet man statt dessen ein Positivfilter, das erfindungsgemäß nicht mit dem Störgas CO₂ sondern mit dem angereicherten Isotop 13 CO₂ gefüllt wird, tritt eine signifikante Besserung ein. Diese Verhältnisse sind nunmehr in Figur 4 dargestellt. Ausgangspunkt ist wiederum das Transmissionsspektrum von N₂O bei einer Konzentration von 100 ppm und einer Meßküvettenlänge von 20 cm. Dies wird nunmehr erfindungsgemäß gefiltert durch eine Filterküvette bzw. ein Filter mit einer Länge von 2 cm, einer Befüllung von 100 % 13 CO₂. Während in natürlichem CO₂ ein Isotopenverhältnis von ca. 99 % 12 CO₂ und 1 % 13 CO₂ vorliegt, ist das Isotop 13 CO₂ nun etwa 100fach angereichert. Das Ergebnis ist somit eine vollständige Unterdrückung der Querempfindlichkeit, weil die mit N₂O überlappenden Banden des CO₂ vollständig vom 13 CO₂-Anteil des CO₂ verursacht wird. Da nun in erfindungsgemäßer Weise das Positivfilter auch mit 13 CO₂ zu 100 % und nicht im Verhältnis der natürlichen Ressource gefüllt ist, kommt es nun zu einer 100 %igen Ausfilterung des eigentlich Querempfindlichkeit erzeugenden 13 CO₂.

## Patentansprüche

1. Verfahren zur Messung einer Meßgaskomponente X mit Hilfe des nichtdispersiven Infrarot-Spektroskopieverfahrens, bei welchem zwischen Meßküvette und Detektor ein Filter bzw. eine Filterküvette angeordnet wird, wobei dort der querempfindliche Signalanteil zu einer Störgaskomponente Y durch Positivfilterung reduziert wird, und wobei der Filter bzw die Filterküvette zur Positivfilterung überwiegend mit einem vom Störgas abweichenden Ersatzgas befüllt wird,
**dadurch gekennzeichnet,**
**dass** die Messgaskomponente N₂O ist und das Ersatzgas nahezu zu 100% aus 13CO₂ besteht.

2. Verfahren zur Messung einer Meßgaskomponente X nach Anspruch 1,
**dadurch gekennzeichnet,**
**dass** die Filterküvette mit einer weiteren Gaskomponente gefüllt wird.

3. Einrichtung zur Messung einer Meßgaskomponente nach dem NDIR-Verfahren mit einer Strahlungsquelle, einer das Meßgas enthaltenden Meßküvette, einem Filter bzw einer Filterküvette, und einem optopneumatischen Detektor, wobei durch den Filter bzw die Filterküvette der Querempfindlichkeitssignalanteil zu einer Störgaskomponente durch Positivfilterung reduzierbar ist, und der Filter bzw die Filterküvette überwiegend mit einem vom Störgas abweichenden Ersatzgas befüllt ist,
**dadurch gekennzeichnet,**
**dass** die Meßgaskomponente N₂O ist und das Ersatzgas nahezu zu 100% aus 13CO₂ besteht.

## Claims

1. Method for measuring a measurement gas component X with the aid of the non-dispersive infrared spectroscopy method, in which a filter or a filter cuvette is arranged between a measurement cuvette and a detector, wherein the signal portion which is cross-sensitive to an interfering gas component Y is reduced using positive filtering, and wherein the filter or the filter cuvette is filled, for positive filtering, predominantly with a substitute gas which is different from the interfering gas, **characterized in that** the measurement gas component is N₂O and the substitute gas consists of nearly 100% of ¹³CO₂.

2. Method for measuring a measurement gas component X according to Claim 1, **characterized in that** the filter cuvette is filled with a further gas component.

3. Device for measuring a measurement gas component according to the NDIR method having a radiation source, a measurement cuvette containing the measurement gas, a filter or a filter cuvette, and an optopneumatic detector, wherein the cross-sensitivity signal portion to an interfering gas component can be reduced by positive filtering by the filter or the filter cuvette and the filter or the filter cuvette is filled predominantly with a substitute gas which is different from the interfering gas, **characterized in that** the measurement gas component is N₂O and the substitute gas consists of nearly 100% of ¹³CO₂.

## Revendications

1. Procédé de mesure d'un composant X d'un gaz à mesurer, à l'aide du procédé de spectroscopie infrarouge non dispersive, dans lequel
un filtre ou une cuvette de filtre sont disposés entre la cuvette de mesure et le détecteur,
la partie du signal à sensibilité transversale étant réduite en cet emplacement par filtrage positif jusqu'à obtenir un composant Y de gaz perturbateur,
le filtre ou la cuvette de filtre étant rempli principalement d'un gaz de remplacement différent du gaz perturbateur en vue du filtrage positif, **caractérisé en ce que**
le composant gazeux à mesurer est N₂O et le gaz de remplacement est constitué presque jusqu'à 100 % de ¹³CO_{2·}

2. Procédé de mesure d'un composant gazeux X à mesurer selon la revendication 1, **caractérisé en ce que** la cuvette de filtration est remplie d'un autre composant gazeux.

3. Dispositif de mesure d'un composant gazeux à mesurer par le procédé NDIR, à l'aide d'une source de rayonnement, d'une cuvette de mesure qui contient le gaz à mesurer, d'un filtre ou d'une cuvette de filtre et d'un détecteur optopneumatique, la proportion du signal à sensibilité transversale pouvant être réduite par le filtre ou la cuvette de filtre et par filtrage positif en un composant gazeux perturbateur, le filtre ou la cuvette de filtre étant principalement remplis d'un gaz de remplacement différent du gaz perturbateur, **caractérisé en ce que**
le composant gazeux à mesurer est N₂O et le gaz de remplacement est constitué presque jusqu'à 100 % de ¹³CO_{2.}
